# EUROPÄISCHE PATENTSCHRIFT

(11) **EP 3 964 715 B1**
(45) Veröffentlichungstag und Bekanntmachung des Hinweises auf die Patenterteilung: **30.10.2024**
(21) Anmeldenummer: 21194242.0
(22) Anmeldetag: 01.09.2021
(51) Int. Cl.: F04D 29/00, F04D 29/60, F16M 11/10, F16M 11/18, F16M 11/20

(54) **MOBILER GROSSVENTILATOR**
LARGE MOBILE FAN
GROS VENTILATEUR MOBILE

(30) Priorität: 02.09.2020 DE 102020211088
(43) Veröffentlichungstag der Anmeldung: 09.03.2022
(73) Patentinhaber: Bader, Jens, 89537 Giengen (DE)
(72) Erfinder: Bader, Jens, 89537 Giengen (DE)
(74) Vertreter: Dr. Weitzel & Partner

(56) Entgegenhaltungen:
- WO-A1-2013/182536
- US-A- 4 447 007
- US-A1- 2019 344 105

## Beschreibung

Die vorliegende Erfindung betrifft einen mobilen Großventilator zur Montage auf einem Kraftfahrzeug, auf einem Fahrzeuganhänger oder einer Plattform, im Einzelnen gemäß dem Oberbegriff von Anspruch 1.

Gattungsgemäße mobile auf Fahrzeugen oder Anhängern montierte Großventilatoren werden bei der Rauch- oder Brandbekämpfung zur Druckbelüftung von Räumen oder Tunneln eingesetzt. Auch bei anderen Vorfällen, beispielsweise bei einem Chemieunfall und anderem kommen diese zum Einsatz, wenn es darum geht ein Luftvolumen oder Gasvolumen aus einem Raum zu verdrängen. Die Montage kann auch auf sogenannten Abrollbehältern oder Abrollcontainern erfolgen, die auf einem Fahrzeug transportiert und am Einsatzort von diesen entladen werden können. Somit betrifft die Erfindung sämtliche mobile Plattformen, auf denen ein Großventilator montiert werden kann.

Um die Druckluft optimal in den Raum oder den Tunnel einleiten zu können, weisen mobile Großventilatoren der gattungsgemäßen Art eine Hubeinrichtung auf, mittels welcher der Ventilator, das heißt das Gehäuse mit dem Ventilatorrad angehoben und abgesenkt werden kann. Vorteilhaft kann der Ventilator auch in der Neigung verstellt werden, das heißt das Gehäuse mit dem Ventilatorrad ist über eine horizontale Achse verschwenkbar.

Herkömmlich wird die Hubeinrichtung durch ein sogenanntes Koppelgetriebe in Scherenkonstruktion getragen, das mit seinem bodenseitigen Ende an einer Aufnahme des Kraftfahrzeugs oder Fahrzeuganhängers befestigt ist und an seinem oberen Ende eine Konsole, beispielsweise in Form einer waagerechten Platte oder eines waagerechten Rahmens aufweist, die/der das Gehäuse mit dem Ventilatorrad trägt. Ein solcher Aufbau wird beispielsweise in der Druckschrift DE 297 18 954 U1 beschrieben.

EP 1 166 823 A2 beschreibt einen auf einem Anhänger montierten Großventilator ohne Hub- und Schwenkeinrichtung.

Gattungsgemäße mobile Großventilatoren sind ferner aus den Druckschriften DE 103 13 703 A1, WO 98/57708 A1 und US 6 336 594 B1 bekannt.

Obwohl die bekannten mobilen Großventilatoren mit der Scherenkonstruktion als Hubeinrichtung robust sind und zuverlässig arbeiten, weisen sie den Nachteil auf, dass der zur Ausbildung der Hubeinrichtung vorgesehene Unterbau unter dem Gehäuse mit dem Ventilatorrad verhältnismäßig hoch ist und dadurch, um eine akzeptable Gesamthöhe des mobilen Großventilators beim Transport zu gewährleisten, in seiner Hubhöhe beschränkt ist.

US 2 836 932 A offenbart einen Ventilator auf einem Anhänger, der auf einer Plattform verschwenkbar montiert ist, die wiederum durch zwei Stangen getragen wird, von denen eine teleskopierbar ist.

Darüber hinaus offenbart WO 2013/182536 A1 einen gattungsgemäßen mobilen Großventilator, dessen Merkmale im Oberbegriff von Anspruch 1 zusammengefasst sind. Dieser mobile Großventilator weist eine Hubeinrichtung mit einem Koppelgetriebe in Form einer Doppelschwinge mit wenigstens zwei Lenkern auf, wobei jeder der beiden Lenker mit einem ersten Drehgelenk an seinem ersten bodenseitigen Ende an einer bodenseitigen Aufnahme des Großventilators und mit einem zweiten Drehgelenk an seinem zweiten gehäuseseitigen Ende an dem Gehäuse mit dem Ventilator zumindest mittelbar angeschlossen ist. Gemäß einer vorteilhaften Ausführungsform ist das Gehäuse mit dem Ventilatorrad gegenüber einer vertikalen Ebene in seiner Neigung verstellbar, wobei hierfür am zweiten Drehgelenk des zweiten Lenkers ein Linearaktuator mit seinem ersten Ende angeschlossen ist und der Linearaktuator mit seinem zweiten Ende unmittelbar an dem Gehäuse mit dem Ventilatorrad gelenkig angeschlossen ist. Das Gehäuse ist ferner gelenkig am zweiten Drehgelenk des ersten Lenkers angeschlossen. Somit kann durch die Verstellung des Linearaktuators das Gehäuse um das zweite Drehgelenk am ersten Lenker verschwenkt werden. Nachteilig ist jedoch, dass mit dieser Neigungsverstellung der Verschwenkbereich des Gehäuses mit dem Ventilatorrad gering ist. Wenn beispielsweise das Gehäuse derart an den beiden Lenkern angeschlossen ist, dass es in einer Grundposition vertikal ausgerichtet ist und mit seinem Ventilatorrad einen horizontalen Luftstrom erzeugt, so reicht die Verschwenkbewegung nicht aus, um in einer ausgelenkten Position das Gehäuse weitgehend horizontal auszurichten, um einen vertikalen Luftstrom zu erzeugen. Der Großventilator ist daher nicht oder nur bedingt geeignet, um beispielsweise einen in einem Boden oder einem Flachdach befindlichen Luftschacht von oben mit Druckluft zu beaufschlagen.

US 4 447 007 A offenbart ein Sprühelement, das auf einer Plattform montiert ist und in alle Richtungen ausgerichtet werden kann.

Der vorliegenden Erfindung liegt die Aufgabe zugrunde, den angegebenen mobilen Großventilator derart weiterzuentwickeln, dass ein Transportzustand mit geringer Höhe und eine große Hubhöhe beibehalten werden, wobei zugleich jedoch die Neigungsverstellung des Gehäuses mit dem Ventilatorrad erheblich vergrößert wird, sodass vorteilhaft auch eine Vertikalbelüftung möglich ist.

Die erfindungsgemäße Aufgabe wird durch einen mobilen Großventilator mit den Merkmalen von Anspruch 1 gelöst. In den abhängigen Ansprüchen werden vorteilhafte und besonders zweckmäßige Ausgestaltungen der Erfindung angegeben.

Der erfindungsgemäße mobile Großventilator zur Montage auf einem Kraftfahrzeug oder Fahrzeuganhänger weist ein Gehäuse sowie ein im oder am Gehäuse vorgesehenes Ventilatorrad auf. Ferner ist eine Hubeinrichtung zur Höhenverstellung des Gehäuses mit dem Ventilatorrad gegenüber einer bodenseitigen Aufnahme des Großventilators vorgesehen. Die Hubeinrichtung umfasst ein bodenseitiges Ende zur Montage an der Aufnahme und ein gehäuseseitiges Ende, an welchem das Gehäuse mit dem Ventilatorrad montiert ist.

Beispielsweise kann die Aufnahme durch eine Konsole gebildet werden, die auf dem Kraftfahrzeug oder dem Fahrzeuganhänger montiert werden kann, insbesondere drehbar um eine vertikale Drehachse. Alternativ kann die Aufnahme auch durch das Kraftfahrzeug oder den Fahrzeuganhänger selbst gebildet werden.

Erfindungsgemäß weist die Hubeinrichtung ein Koppelgetriebe in Form einer Doppelschwinge mit wenigstens zwei Lenkern auf, wobei jeder der beiden Lenker mit einem ersten Drehgelenk an seinem ersten, dem bodenseitigen Ende an der Aufnahme und mit einem zweiten Drehgelenk an seinem zweiten, dem gehäuseseitigen Ende an dem Gehäuse mit dem Ventilatorrad zumindest mittelbar angeschlossen ist. Ein Koppelgetriebe in Form einer Doppelschwinge zeichnet sich im Unterschied zu der eingangs genannten Scherenkonstruktion dadurch aus, dass beim Anheben des Gehäuses mit dem Ventilatorrad sich die zweiten Drehgelenke der Lenker im Wesentlichen gemeinsam in eine Richtung um den Bereich beziehungsweise relativ zu dem Bereich der ersten Drehgelenke bewegen. Das Koppelgetriebe der Hubeinrichtung beziehungsweise die gesamte Hubeinrichtung macht demnach keinen Gebrauch beziehungsweise ist frei von einer Scherenkonstruktion.

Gemäß der Erfindung kann das Gehäuse mit dem Ventilatorrad mit der Hubeinrichtung nicht nur gegen die Aufnahme in der Höhe verstellt werden, sondern die Hubeinrichtung ist zugleich zur Verstellung des Gehäuses mit dem Ventilatorrad in seiner Neigung gegenüber einer senkrechten Ebene ausgeführt. Bevorzugt kann dabei das Gehäuse mit dem Ventilatorrad über einen Winkel von mehr als 90° oder von mehr als 120° verstellt werden.

Erfindungsgemäß wird dies dadurch erreicht, dass wenigstens eines der beiden zweiten Drehgelenke über einen mit einem Linearaktuator betätigbaren oder betätigten Umlenkhebel an dem Gehäuse mit dem Ventilatorrad angeschlossen ist, wobei der Umlenkhebel mehrgliedrig ausgeführt ist und einerseits gelenkig am Linearaktuator und andererseits gelenkig am Gehäuse angeschlossen ist. Der Anschluss am Linearaktuator und/oder am Gehäuse kann ein direkter Anschluss oder ein Anschluss über wenigstens ein zwischengeordnetes Bauteil sein.

Gemäß einer vorteilhaften Ausgestaltung der Erfindung weist der Umlenkhebel ein gelenkig am Linearaktuator angeschlossenes erstes Glied und ein gelenkig am Gehäuse und gelenkig am ersten Glied angeschlossenes zweites Glied auf. Die beiden Glieder können durch sich im Wesentlichen linear erstreckende Bauteile gebildet werden.

Mit dieser mehrgliedrigen Gestaltung kann die Neigungsverstellung zum einen kompakt und zum anderen mit günstigen Hebelverhältnissen ausgeführt werden.

Bevorzugt ist der Linearaktuator direkt oder über ein Zwischenbauteil am zweiten Drehgelenk des zweiten Lenkers angeschlossen und das erste Glied ist mit einem dritten Drehgelenk direkt oder über ein/das Zwischenbauteil gelenkig am zweiten Drehgelenk des ersten Lenkers angeschlossen.

Beispielsweise ist das Zwischenbauteil gelenkig am zweiten Drehgelenk des ersten Lenkers und gelenkig am zweiten Drehgelenk des zweiten Lenkers angeschlossen.

Das Zwischenbauteil kann ferner über ein viertes Drehgelenk gelenkig am Gehäuse angeschlossen sein.

Der Abstand zwischen einem fünften Drehgelenk, mit welchem der Umlenkhebel gelenkig am Gehäuse angeschlossen ist, und dem vierten Drehgelenk ist bevorzugt kleiner als der Abstand zwischen dem dritten Drehgelenk und einem sechsten Drehgelenk, mit welchem das zweite Glied gelenkig am ersten Glied angeschlossen ist. Damit wird eine bevorzugte Übersetzung erreicht. Wenn sich beispielsweise das erste Glied des Umlenkhebels um einen vorgegebenen ersten Winkel bewegt, so kann sich das gelenkig am Zwischenbauteil angeschlossene Gehäuse um einen entsprechend vergrößerten zweiten Winkel verschwenken.

Gemäß einer alternativen Ausführungsform kann der gelenkige Anschluss des Umlenkhebels am zweiten Drehgelenk beispielsweise des ersten Lenkers vorgesehen sein oder mit dem vierten Drehgelenk zusammenfallen, sodass das vierte Drehgelenk sowohl zum Anschluss des Gehäuses am Zwischenbauteil als auch des Umlenkhebels am Zwischenbauteil verwendet werden kann.

Das Zwischenbauteil ist zum Beispiel plattenförmig oder als flächiges Bauteil ausgeführt und kann eine dem Gehäuse zugewandte Schräge aufweisen, die ein Anschlagen des Gehäuses am Zwischenbauteil bei vergleichsweise kleinen Verdrehwinkeln des Gehäuses gegenüber dem Zwischenbauteil vermeidet.

Der Anschluss des Linearaktuators am Zwischenbauteil kann bevorzugt über einen Träger erfolgen, der beispielsweise gabelförmig ist.

Günstig ist es, wenn der Hubeinrichtung ein Aktuator mit einem Hubzylinder oder einer Teleskopspindel zugeordnet ist, wobei der Aktuator an dem Koppelgetriebe oder dem Gehäuse zur gemeinsamen Verschwenkung der beiden Lenker über den ersten Drehgelenken angeschlossen ist.

Günstig ist es, wenn das Koppelgetriebe als Viergelenk ausgeführt ist, wobei alle Drehachsen der beiden ersten Drehgelenke und der beiden zweiten Drehgelenke parallel zueinander ausgerichtet sind.

Eine günstige Ausführungsform sieht vor, dass eine Konsole, welche die Aufnahme bildet, sich mit einer Höhe in Vertikalrichtung erstreckt, die wenigstens der Hälfte einer Höhe des Gehäuses mit dem Ventilatorrad entspricht. In diesem Fall ist es leicht möglich, die beiden ersten Drehgelenke am oberen Ende der Konsole anzuschließen und somit das Gehäuse mit dem Ventilatorrad in der Transportstellung im abgesenkten Zustand in der Höhe des Anschlusses beziehungsweise darunter zu verstauen. Gemäß einer Ausführungsform sind dabei die beiden zweiten Drehgelenke am oberen Ende des Gehäuses mit dem Ventilator angeschlossen. Jedoch ist auch ein Anschluss darunter, insbesondere an dem unteren Ende möglich und zur Erreichung einer hohen Hubhöhe sogar von Vorteil. Die Konsole kann zum Beispiel auch als Rahmenteil ausgeführt sein.

Um die Gewichtskräfte und Verstellkräfte/Betriebskräfte auf mehrere Lenker zu verteilen, sind die Lenker gemäß einer Ausführungsform jeweils paarweise oder mehrfach vorgesehen, wobei die Lenker jeweils eines Paares oder der Mehrfachanordnung erste und zweite Drehgelenke mit gemeinsamen Drehachsen aufweisen. Zusätzlich oder alternativ können auch das Zwischenbauteil, der Linearaktuator und/oder der Umlenkhebel paarweise oder mehrfach vorgesehen sein, um die entsprechenden Kräfte zu verteilen. Insbesondere im Betrieb des Ventilators und oder beim Fahren des mobilen Ventilators können nämlich zum Beispiel Querkräfte auftreten, die durch die jeweils doppelt oder mehrfach vorgesehenen Bauteile besser abgestützt werden.

Eine erfindungsgemäße Ausführungsform betrifft ein Kraftfahrzeug oder einen Fahrzeuganhänger, auf welchem ein mobiler Großventilator gemäß der Erfindung montiert ist.

Eine Montageplattform oder der Anhänger beziehungsweise das Kraftfahrzeug selbst können gemäß einer erfindungsgemäßen Ausführungsform eine Aufnahme für das Gehäuse mit dem Ventilatorrad aufweisen, in welche das Gehäuse mit dem Ventilatorrad im abgesenkten Zustand eingreift und dadurch formschlüssig gegen ein Verrutschen und/oder bei einer Ausführungsform mit drehbarer Konsole gegen ein Verdrehen gesichert ist. Somit muss das Gehäuse mit dem Ventilatorrad beim Absenken lediglich in die Aufnahme eingebracht werden, wodurch der Transport gesichert ist. Selbstverständlich können weitere Sicherungsmaßnahmen vorgesehen sein.

Die Erfindung soll nachfolgend anhand von Ausführungsbeispielen exemplarisch beschrieben werden.

Es zeigen:
- Figur 1: eine exemplarische Darstellung eines mobilen Großventilators, der eine rahmenförmige Konsole aufweist, die an ihrem oberen Ende eine Doppelschwinge trägt, die erfindungsgemäß am Gehäuse mit dem Ventilatorrad angeschlossen ist, wobei das Gehäuse vertikal ausgerichtet ist;
- Figur 2: einen vergrößerten Ausschnitt des Anschlusses des Gehäuses aus der Figur 1;
- Figur 3: eine Darstellung entsprechend der Figur 1 mit schräg nach hinten geneigtem Gehäuse;
- Figur 4: eine Darstellung entsprechend der Figur 2 mit einer Ausrichtung des Gehäuses gemäß der Figur 3;
- Figur 5: eine Darstellung entsprechend der Figur 1 mit schräg nach vorne geneigtem Gehäuse;
- Figur 6: eine entsprechende Vergrößerung aus der Figur 5;
- Figur 7: eine Darstellung des Großventilators schräg von oben.

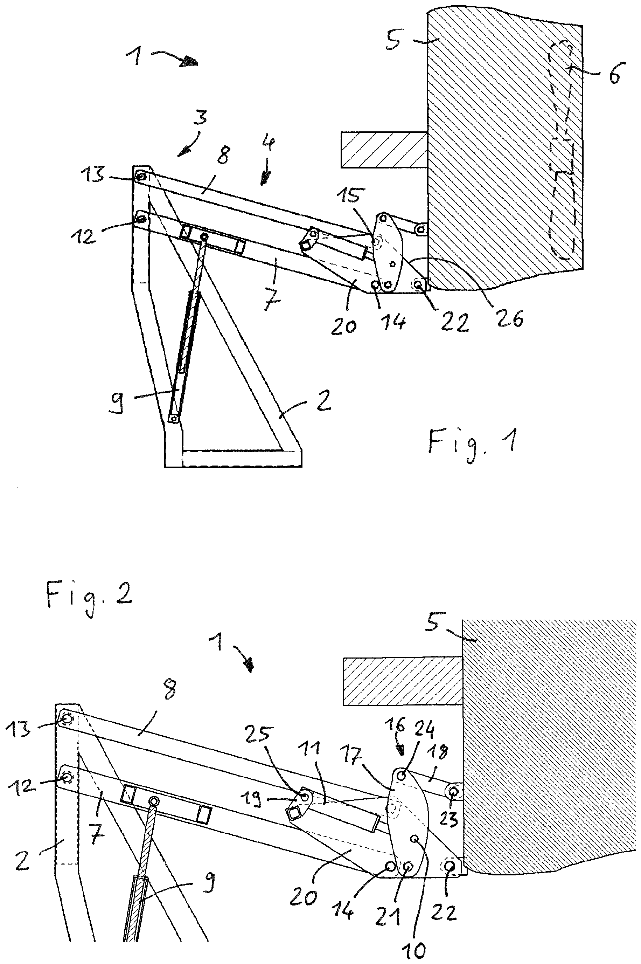

In der Figur 1 ist exemplarisch ein erfindungsgemäßer mobiler Großventilator 1 gezeigt, der beispielsweise auf einem Anhänger oder einer Plattform montiert werden kann. Der mobile Großventilator weist eine Konsole 2 auf, die drehbar um eine vertikale Achse ist. Die Konsole 2 ist beispielsweise als Rahmenbauteil ausgeführt. Die Konsole 2 bildet eine Aufnahme 3 für die Hubeinrichtung 4 des Gehäuses 5 mit dem Ventilatorrad 6.

Die Hubeinrichtung 4 weist ein Koppelgetriebe in Form einer Doppelschwinge, hier gebildet durch ein Viergelenk, auf, mit einem ersten Lenker 7 und einem zweiten darüber positionierten Lenker 8. Ferner weist die Hubeinrichtung 4 einen Aktuator 9 in Form eines hydraulisch betätigten Hubzylinders oder Drehaktuators auf. Vorliegend ist der Aktuator 9 an der Konsole 2 und dem ersten Lenker 7 angeschlossen. Es könnten auch andere Anschlusspunkte gewählt werden, beispielsweise am Gehäuse 5 oder einem Zwischenbauteil 20, das noch beschrieben wird.

Durch Einfahren und Ausfahren des Hubzylinders kann das Gehäuse 5 mit dem Ventilatorrad 6 relativ zu der Konsole 2 auf und ab gefahren werden.

Die hier gezeigten beiden Lenker 7, 8 können die einzigen Lenker der Hubeinrichtung 4 sein. Alternativ ist es auch möglich, beispielsweise beidseitig des Gehäuses 5 entsprechende Lenker vorzusehen, die gleichwirkend arbeiten, somit entsprechende Lenkerpaare vorzusehen.

Jeder der beiden Lenker 7, 8, also der erste Lenker 7, der im gezeigten Ausführungsbeispiel ein unterer Lenker ist, und der zweite Lenker 8, der im gezeigten Ausführungsbeispiel ein über dem ersten Lenker 7 angeordneter oberer Lenker ist, weist ein erstes Drehgelenk 12, 13 an seinem ersten bodenseitigen Ende an der Aufnahme 3 auf, sowie ein zweites Drehgelenk 14, 15 an seinem zweiten gehäuseseitigen Ende. An den beiden zweiten Drehgelenken 14, 15 ist das Zwischenbauteil 20, das insbesondere plattenförmig ist, gelenkig angeschlossen. Ferner ist das Gehäuse 5 gelenkig am Zwischenbauteil 20 angeschlossen, nämlich über ein Drehgelenk, das vorliegend als viertes Drehgelenk 22 bezeichnet wird.

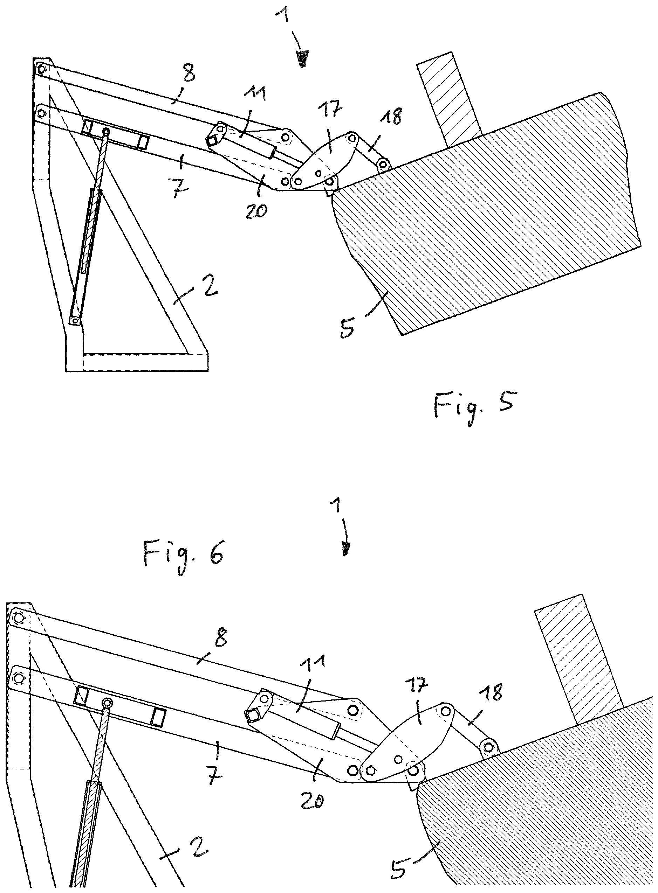

Die Details des Anschlusses des Gehäuses 5 über das Zwischenbauteil 20 an den zweiten Lenkern 7, 8 sind besonders aus den vergrößerten Darstellungen in den Figuren 2, 4, 6 entnehmbar, verschiedene mögliche Stellungen des Gehäuses 5, mehr oder minder verschwenkt um das vierte Drehgelenk 22 sind ebenfalls aus den vergrößerten Darstellungen in Zusammenhang mit den Figuren 1, 3 und 5 entnehmbar.

Bevorzugt bleibt das Zwischenbauteil 20 in allen Verstellpositionen des Gehäuses 5 unverändert ausgerichtet gegenüber einer horizontalen beziehungsweise einer vertikalen Ebene. Das Verschwenken des Gehäuses 5 relativ zum Zwischenbauteil 20 um das vierte Drehgelenk 22 wird mit einem Linearaktuator 11 bewirkt, der einen Umlenkhebel 16 betätigt, der im gezeigten Ausführungsbeispiel zweigliedrig ausgeführt ist, mit einem ersten Glied 17 und einem zweiten Glied 18. Das erste Glied 17 des Umlenkhebels 16 ist mit einem dritten Drehgelenk 21 hier direkt am Zwischenbauteil 20 gelenkig angeschlossen. Alternativ könnte der Anschluss auch am ersten Lenker 7 oder am Gehäuse 5 vorgesehen sein, beispielsweise zusammenfallend mit dem zweiten Drehgelenk 14 oder dem vierten Drehgelenk 22.

Das zweite Glied 18 des Umlenkhebels 16 ist ferner mit einem fünften Drehgelenk 23 gelenkig am Gehäuse 5 angeschlossen und mit einem sechsten Drehgelenk 24 gelenkig am ersten Glied 17. Der Abstand zwischen dem dritten Drehgelenk 21 und dem sechsten Drehgelenk 24 ist bevorzugt größer als der Abstand zwischen dem zweiten Drehgelenk 22 und dem fünften Drehgelenk 23. Dadurch wird eine Übersetzung geschaffen, durch welche ein Verschwenken des ersten Glieds 17 um das dritte Drehgelenk 21 zu einem Verschwenken des Gehäuses 5 um das vierte Drehgelenk 22 mit einem vergleichsweise größeren Winkel führt.

Zum Verschwenken des ersten Glieds 17 ist der Linearaktuator 11 über ein siebtes Drehgelenk 10 am ersten Glied 17 angeschlossen. Ferner ist der Linearaktuator 11 mit seinem entgegengesetzten Ende über ein achtes Drehgelenk 25 am Zwischenbauteil 20 angeschlossen. Dabei kann das achte Drehgelenk 25 beispielsweise durch einen gabelförmigen Träger 19 gebildet werden, der insbesondere starr am Zwischenbauteil 20 befestigt ist.

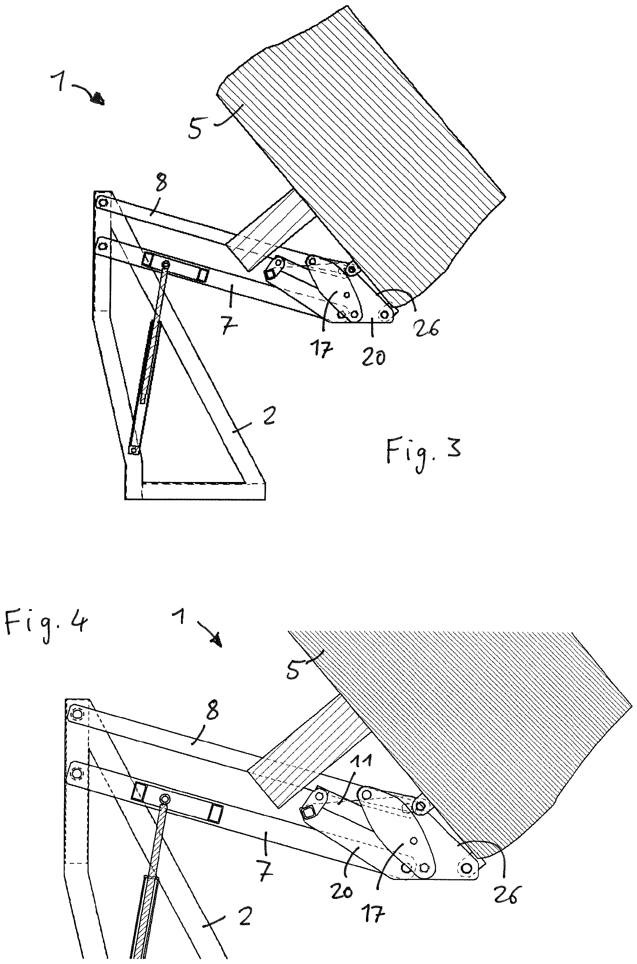

Wie sich insbesondere aus den Figuren 3 und 4 ergibt, weist das Zwischenbauteil 20 bevorzugt eine dem Gehäuse 5 zugewandte Schräge 26 auf, die eine Kollision des Gehäuses 5 mit dem Zwischenbauteil 20 vermeidet, wenn das Gehäuse 5 auf das Zwischenbauteil 20 zu verschwenkt wird, um einen Luftstrom schräg nach oben zu richten.

Die Übersetzung im Anschluss des Gehäuses 5 an den beiden Lenkern 7, 8 ermöglicht ein besonders weites Verschwenken des Gehäuses 5 in Richtung weg vom Zwischenbauteil 20, sodass zum Beispiel auch bevorzugt eine horizontale Ausrichtung des Gehäuses 5 erreicht werden kann, mit einem senkrecht nach unten gerichteten, vom Ventilatorrad 6 erzeugten Luftstrom. Bevorzugt ist eine Verschwenkbarkeit des Gehäuses 5 über einen Winkel von mehr als 90° oder mehr als 120° vorgesehen.

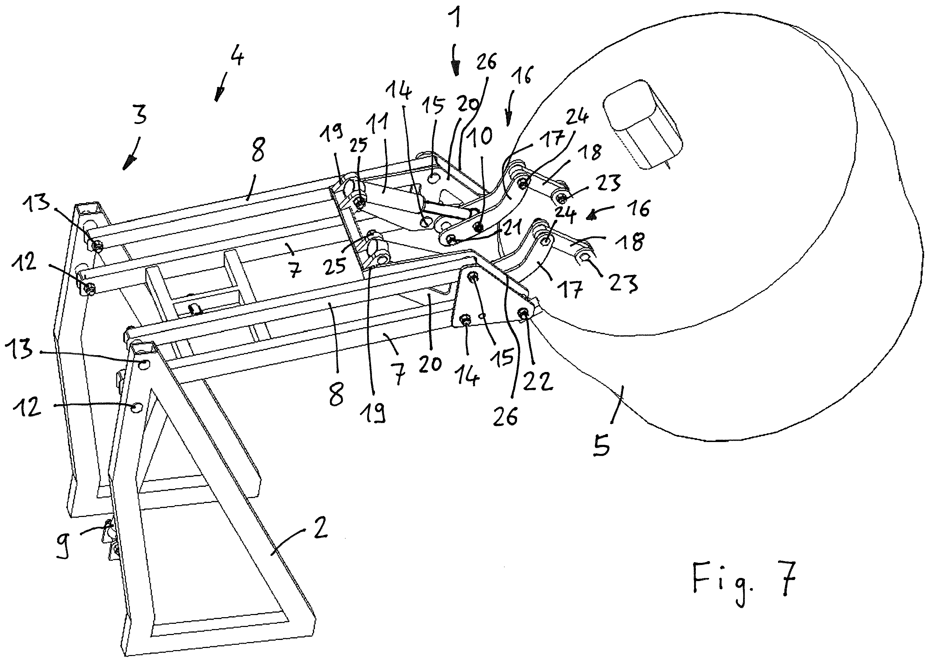

In der Figur 7 ist eine Darstellung des mobilen Großventilators 1 schräg von oben gezeigt. Abweichend von den übrigen Darstellungen sind die ersten Glieder 17 vergleichsweise schlanker und gekrümmt ausgebildet. Es könnten jedoch auch die Formen aus den Figuren 1 bis 6 vorgesehen werden oder bei der Ausgestaltung gemäß den Figuren 1 bis 6 könnte die Form der ersten Glieder aus der Figur 7 vorgesehen sein. Grundsätzlich sind auch noch andere Formgestaltungen möglich, beispielsweise eine gerade lineare Form.

Ferner ist in der Figur 7 eine doppelte Anordnung der Lenker 7,8, Zwischenbauteile 20, Linearaktuatoren 11 und Umlenkhebel 16 gezeigt, welche besonders Querkräfte besser aufnehmen kann. Bevorzugt sind zumindest die unteren Lenker 7 und/oder Zwischenbauteil 20 über eine oder mehrere Streben miteinander verbunden. An der Verbindungstrebe der Lenker 7 kann insbesondere der Aktuator 9 angreifen.

Die Lenker 7,8 schließen bevorzugt die Umlenkhebel 16 und insbesondere die Zwischenbauteil 20 und Linearaktuatoren 11 zwischen sich ein, könnten jedoch auch in der Querrichtung innerhalb von diesen angeordnet sein. Auch könnten zwei parallel Lenkerpaare 7,8 mit nur einem Zwischenbauteil 20 und/oder Umlenkhebel 16 und Linearaktuator 11 kombiniert werden, oder umgekehrt.

### Bezugszeichen

- 1: mobiler Großventilator
- 2: Konsole
- 3: bodenseitige Aufnahme
- 4: Hubeinrichtung
- 5: Gehäuse
- 6: Ventilatorrad
- 7: erster Lenker
- 8: zweiter Lenker
- 9: Aktuator
- 10: siebtes Drehgelenk
- 11: Linearaktuator
- 12: erstes Drehgelenk
- 13: erstes Drehgelenk
- 14: zweites Drehgelenk
- 15: zweites Drehgelenk
- 16: Umlenkhebel
- 17: erstes Glied
- 18: zweites Glied
- 19: Träger
- 20: Zwischenbauteil
- 21: drittes Drehgelenk
- 22: viertes Drehgelenk
- 23: fünftes Drehgelenk
- 24: sechstes Drehgelenk
- 25: achtes Drehgelenk
- 26: Schräge

## Patentansprüche

1. Mobiler Großventilator (1) zur Montage auf einem Kraftfahrzeug, einem Fahrzeuganhänger oder einer Plattform;
1.1 mit einem Gehäuse (5) und einem im oder am Gehäuse (5) vorgesehenen Ventilatorrad (6);
1.2 mit einer Hubeinrichtung (4) zur Höhenverstellung des Gehäuses (5) mit dem Ventilatorrad (6) gegenüber einer bodenseitigen Aufnahme (3) des Großventilators (1), wobei
1.3 die Hubeinrichtung (4) ein bodenseitiges Ende zur Montage an der Aufnahme (3) und ein gehäuseseitiges Ende, an welchem das Gehäuse (5) mit dem Ventilatorrad (6) montiert ist, aufweist; und
1.4 die Hubeinrichtung (4) ein Koppelgetriebe in Form einer Doppelschwinge mit wenigstens zwei Lenkern (7, 8) aufweist, wobei jeder der beiden Lenker (7, 8) mit einem ersten Drehgelenk (12, 13) an seinem ersten bodenseitigen Ende an der Aufnahme (3) und mit einem zweiten Drehgelenk (14, 15) an seinem zweiten gehäuseseitigen Ende an dem Gehäuse (5) mit dem Ventilatorrad (6) zumindest mittelbar angeschlossen ist;
**dadurch gekennzeichnet, dass**
1.5 wenigstens eines der beiden zweiten Drehgelenke (14, 15) über einen mit einem Linearaktuator (11) betätigbaren Umlenkhebel (16) an dem Gehäuse (5) mit dem Ventilatorrad (6) angeschlossen ist, wobei der Umlenkhebel (16) mehrgliedrig ausgeführt ist und einerseits gelenkig am Linearaktuator (11) und andererseits gelenkig am Gehäuse (5) angeschlossen ist.

2. Mobiler Großventilator (1) gemäß Anspruch 1, **dadurch gekennzeichnet, dass** der Umlenkhebel (16) ein gelenkig am Linearaktuator (11) angeschlossenes erstes Glied (17) und ein gelenkig am Gehäuse (5) und gelenkig am ersten Glied (17) angeschlossenes zweites Glied (18) aufweist.

3. Mobiler Großventilator (1) gemäß Anspruch 2, **dadurch gekennzeichnet, dass** der Linearaktuator (11) direkt oder über ein Zwischenbauteil (20) gelenkig am zweiten Drehgelenk (15) des zweiten Lenkers (8) angeschlossen ist und das erste Glied (17) mit einem dritten Drehgelenk (21) direkt oder über ein Zwischenbauteil (20) gelenkig am zweiten Drehgelenk (14) des ersten Lenkers (7) angeschlossen ist.

4. Mobiler Großventilator (1) gemäß Anspruch 3, **dadurch gekennzeichnet, dass** das Zwischenbauteil (20) gelenkig am zweiten Drehgelenk (14) des ersten Lenkers (7) und gelenkig am zweiten Drehgelenk (15) des zweiten Lenkers (8) angeschlossen ist.

5. Mobiler Großventilator (1) gemäß einem der Ansprüche 3 oder 4, **dadurch gekennzeichnet, dass** das Zwischenbauteil (20) ferner über ein viertes Drehgelenk (22) gelenkig am Gehäuse (5) angeschlossen ist.

6. Mobiler Großventilator (1) gemäß Anspruch 5, **dadurch gekennzeichnet, dass** der Abstand zwischen einem fünften Drehgelenk (23), mit welchem der Umlenkhebel (16) gelenkig am Gehäuse (5) angeschlossen ist, und dem vierten Drehgelenk (22) kleiner als der Abstand zwischen dem dritten Drehgelenk (21) und einem sechsten Drehgelenk (24) ist, mit welchem das zweite Glied (18) gelenkig am ersten Glied (17) angeschlossen ist.

7. Mobiler Großventilator (1) gemäß einem der Ansprüche 1 bis 6, **dadurch gekennzeichnet, dass** der Hubeinrichtung (4) ein Aktuator (9) mit einem Hubzylinder oder einer Teleskopspindel zugeordnet ist, der an dem Koppelgetriebe oder dem Gehäuse (5) zur gemeinsamen Verschwenkung der beiden Lenker (7, 8) über den ersten Drehgelenken (12, 13) zumindest mittelbar angeschlossen ist.

8. Mobiler Großventilator (1) gemäß einem der Ansprüche 1 bis 7, **dadurch gekennzeichnet, dass** das Koppelgetriebe als Viergelenk ausgeführt ist, mit allen Drehachsen der beiden ersten Drehgelenke (12, 13) und der beiden zweiten Drehgelenke (14, 15) parallel zueinander ausgerichtet.

9. Mobiler Großventilator (1) gemäß einem der Ansprüche 1 bis 8, **dadurch gekennzeichnet, dass** die Aufnahme (3) durch eine um eine vertikale Achse drehbare Konsole (2) gebildet wird.

10. Mobiler Großventilator (1) gemäß einem der Ansprüche 1 bis 9, **dadurch gekennzeichnet, dass** die Lenker (7, 8) jeweils paarweise oder mehrfach ausgeführt sind und die Lenker jeweils eines Paares oder der Mehrfachanordnung erste und zweite Drehgelenke (12, 13, 14, 15) mit jeweils gemeinsamer Drehachse aufweisen, und/oder das Zwischenbauteil (20), der Linearaktuator (11) und/oder der Umlenkhebel (16) paarweise oder mehrfach ausgeführt sind, mit ihren entsprechenden Drehgelenken (10, 14, 15, 21-25) jeweils auf einer gemeinsamen Drehachse angeordnet.

11. Kraftfahrzeug, Fahrzeuganhänger oder Plattform, **dadurch gekennzeichnet, dass** ein mobiler Großventilator (1) gemäß einem der Ansprüche 1 bis 10 mit seiner Hubeinrichtung (4) auf diesem/dieser montiert ist.

## Claims

1. Large mobile fan (1) for mounting on a motor vehicle, a vehicle trailer or a platform;
1.1 having a housing (5) and a fan wheel (6) provided in or on the housing (5);
1.2 having a lifting device (4) for adjusting the height of the housing (5) with the fan wheel (6) relative to a base-side receptacle (3) of the large fan (1), wherein
1.3 the lifting device (4) has a base-side end for mounting on the receptacle (3) and a housing-side end on which the housing (5) with the fan wheel (6) is mounted; and
1.4 the lifting device (4) has a coupling gear in the form of a double rocker having at least two link arms (7, 8), wherein each of the two link arms (7, 8) is connected at least indirectly with a first swivel joint (12, 13) at its first end on the base side to the receptacle (3) and with a second swivel joint (14, 15) at its second end on the housing side to the housing (5) with the fan wheel (6);
**characterized in that**
1.5 at least one of the two second swivel joints (14, 15) is connected to the housing (5) with the fan wheel (6) via a deflection lever (16) which can be actuated by a linear actuator (11), wherein the deflection lever (16) is of multi-link design and is connected on the one hand to the linear actuator (11) in an articulated manner and on the other hand to the housing (5) in an articulated manner.

2. Large mobile fan (1) according to claim 1, **characterized in that** the deflection lever (16) has a first member (17) connected in an articulated manner to the linear actuator (11) and a second member (18) connected in an articulated manner to the housing (5) and in an articulated manner to the first member (17).

3. Large mobile fan (1) according to claim 2, **characterized in that** the linear actuator (11) is connected in an articulated manner directly or via an intermediate component (20) to the second swivel joint (15) of the second link arm (8) and the first link (17) is connected in an articulated manner with a third swivel joint (21) directly or via an intermediate component (20) to the second swivel joint (14) of the first link arm (7).

4. Large mobile fan (1) according to claim 3, **characterized in that** the intermediate component (20) is connected in an articulated manner to the second swivel joint (14) of the first link arm (7) and in an articulated manner to the second swivel joint (15) of the second link arm (8).

5. Large mobile fan (1) according to one of claims 3 or 4, **characterized in that** the intermediate component (20) is further connected to the housing (5) in an articulated manner via a fourth swivel joint (22).

6. Large mobile fan (1) according to claim 5, **characterized in that** the distance between a fifth swivel joint (23), with which the deflection lever (16) is connected in an articulated manner to the housing (5), and the fourth swivel joint (22) is smaller than the distance between the third swivel joint (21) and a sixth swivel joint (24), with which the second member (18) is connected in an articulated manner to the first member (17).

7. Large mobile fan (1) according to one of claims 1 to 6, **characterized in that** the lifting device (4) is assigned an actuator (9) with a lifting cylinder or a telescopic spindle, which is connected at least indirectly to the coupling gear or the housing (5) for joint pivoting of the two links (7, 8) via the first swivel joints (12, 13).

8. Large mobile fan (1) according to one of claims 1 to 7, **characterized in that** the coupling gear is designed as a four-bar linkage, with all axes of rotation of the two first swivel joints (12, 13) and the two second swivel joints (14, 15) aligned parallel to each other.

9. Large mobile fan (1) according to one of claims 1 to 8, **characterized in that** the receptacle (3) is formed by a bracket (2) rotatable about a vertical axis.

10. Large mobile fan (1) according to one of claims 1 to 9, **characterized in that** the link arms (7, 8) are each designed in pairs or in multiples and the link arms of each pair or of the multiple arrangement have first and second swivel joints (12, 13, 14, 15) each with a common axis of rotation, and/or the intermediate component (20), the linear actuator (11) and/or the deflection lever (16) are designed in pairs or in multiples, with their corresponding swivel joints (10, 14, 15, 21-25) each arranged on a common axis of rotation.

11. Motor vehicle, vehicle trailer or platform, **characterized in that** a large mobile fan (1) according to one of claims 1 to 10 is mounted on this/these with its lifting device (4).

## Revendications

1. Gros ventilateur mobile (1) destiné à être monté sur un véhicule automobile, une remorque de véhicule ou une plate-forme ;
1.1 avec un boîtier (5) et une roue de ventilateur (6) prévue dans ou sur le boîtier (5) ;
1.2 avec un dispositif de levage (4) pour le réglage en hauteur du boîtier (5) avec la roue de ventilateur (6) par rapport à un logement (3) côté fond du gros ventilateur (1),
1.3 le dispositif de levage (4) présentant une extrémité côté fond pour le montage sur le logement (3) et une extrémité côté boîtier sur laquelle est monté le boîtier (5) avec la roue de ventilateur (6) ; et
1.4 le dispositif de levage (4) présentant un engrenage couplé sous la forme d'un double bras oscillant avec au moins deux bras (7, 8), chacun des deux bras (7, 8) étant raccordé au moins indirectement au logement (3) par une première articulation (12, 13) à sa première extrémité côté fond et au boîtier (5) avec la roue de ventilateur (6) par une deuxième articulation (14, 15) à sa deuxième extrémité côté boîtier ;
**caractérisé en ce qu'**
1.5 au moins l'une des deux deuxièmes articulations (14, 15) est raccordée au boîtier (5) avec la roue de ventilateur (6) par un levier de renvoi (16) actionnable par un actionneur linéaire (11), le levier de renvoi (16) étant réalisé à plusieurs éléments et étant articulé d'une part sur l'actionneur linéaire (11) et d'autre part sur le boîtier (5).

2. Gros ventilateur mobile (1) selon la revendication 1, **caractérisé en ce que** le levier de renvoi (16) présente un premier élément (17) articule sur l'actionneur linéaire (11) et un deuxième élément (18) articulé sur le boîtier (5) et sur le premier élément (17).

3. Gros ventilateur mobile (1) selon la revendication 2, **caractérisé en ce que** l'actionneur linéaire (11) est articulé directement ou par un composant intermédiaire (20) sur la deuxième articulation (15) du deuxième bras (8) et le premier élément (17) est articulé par une troisième articulation (21) directement ou par un composant intermédiaire (20) sur la deuxième articulation (14) du premier bras (7).

4. Gros ventilateur mobile (1) selon la revendication 3, **caractérisé en ce que** le composant intermédiaire (20) est articulé sur la deuxième articulation (14) du premier bras (7) et sur la deuxième articulation (15) du deuxième bras (8).

5. Gros ventilateur mobile (1) selon l'une des revendications 3 ou 4, **caractérisé en ce que** le composant intermédiaire (20) est en outre articulé sur le boîtier (5) par une quatrième articulation (22).

6. Gros ventilateur mobile (1) selon la revendication 5, **caractérisé en ce que** la distance entre une cinquième articulation (23), par laquelle le levier de renvoi (16) est articulé sur le boîtier (5), et la quatrième articulation (22) est inférieure à la distance entre la troisième articulation (21) et une sixième articulation (24), par laquelle le deuxième élément (18) est articulé sur le premier élément (17).

7. Gros ventilateur mobile (1) selon l'une des revendications 1 à 6, **caractérisé en ce qu'**au dispositif de levage (4) est associé un actionneur (9) avec un vérin de levage ou une broche télescopique, qui est raccordé au moins indirectement à l'engrenage couplé ou au boîtier (5) pour le pivotement commun des deux bras (7, 8) par les premières articulations (12, 13).

8. Gros ventilateur mobile (1) selon l'une des revendications 1 à 7, **caractérisé en ce que** l'engrenage couplé est réalisé sous la forme de quatre articulations, avec tous les axes de rotation des deux premières articulations (12, 13) et des deux deuxièmes articulations (14, 15) alignés parallèlement entre eux.

9. Gros ventilateur mobile (1) selon l'une des revendications 1 à 8, **caractérisé en ce que** le logement (3) est formé par une console (2) tournable autour d'un axe vertical.

10. Gros ventilateur mobile (1) selon l'une des revendications 1 à 9, **caractérisé en ce que** les bras (7, 8) sont respectivement réalisés par paires ou multiples et les bras respectivement d'une paire ou de l'agencement multiple présentent des premières et deuxièmes articulations (12, 13, 14, 15) avec respectivement un axe de rotation commun, et/ou le composant intermédiaire (20), l'actionneur linéaire (11) et/ou le levier de renvoi (16) sont réalisés par paires ou multiples, avec leurs articulations correspondantes (10, 14, 15, 21-25) disposées respectivement sur un axe de rotation commun.

11. Véhicule automobile, remorque de véhicule ou plate-forme, **caractérisé en ce qu'**un gros ventilateur mobile (1) selon l'une des revendications 1 à 10 est monté sur celui-ci/celle-ci avec son dispositif de levage (4).
